# EUROPEAN PATENT SPECIFICATION

(11) **EP 2 687 728 B1**
(45) Date of publication and mention of the grant of the patent: **20.06.2018**
(21) Application number: 13188771.3
(22) Date of filing: 20.01.2011
(51) Int. Cl.: F04D 15/00, F04D 29/46, F04D 29/62, F01P 7/14, F01P 5/12, F16K 27/02

(54) **Cooling pump with a valve group**
Kühlmittelpumpe mit einer Ventileinheit
Pompe de refroidissement avec un groupe de valves

(30) Priority: 08.02.2010 IT BS20100021
(43) Date of publication of application: 22.01.2014
(62) Divisional of application: 11705256.3
(73) Proprietor: Industrie Saleri Italo S.P.A., 25065 Lumezzane, Brescia (IT)
(72) Inventor: Tebaldini, Giovanni, 25065 Lumezzane, Bescia (IT)
(74) Representative: Pulieri, Gianluca Antonio

(56) References cited:
- EP-A1- 1 653 311
- EP-A2- 2 131 042
- WO-A1-86/03809
- WO-A2-2007/025375
- DE-A1-102007 023 858
- JP-A- 57 191 498

## Description

The present invention relates to a valve group for a cooling pump, in particular for the automobile sector, as defined in the preamble of Claim 1. Such a pump is known e.g. from EP 1 653 311.

It is well known that the cooling pump is the main component of the cooling circuit for thermal engines, especially in vehicles. Particular attention is therefore paid to the correct design of such components and to the continual improvement of their performance.

Examples of cooling pumps are illustrated in documents EP-A1-1503083 and PCT/IT2009/000269, in the Applicant's name.

In particular, in the document PCT/IT2009/000269, the obturator downstream of the rotor plays an essential role.

The aim of the present invention is to make a valve group comprising an obturator, particularly suitable for use in the cooling pump sphere.

Such purpose is achieved by a valve group made according to claim 1.

The characteristics and advantages of the valve group according to the present invention will be evident from the description given below, made by way of a nonlimiting example, in accordance with the appended drawings wherein:
- figures 1a and 1b show a diagram of a pump according to the present invention, according to one embodiment, respectively in a closed configuration and an open configuration;

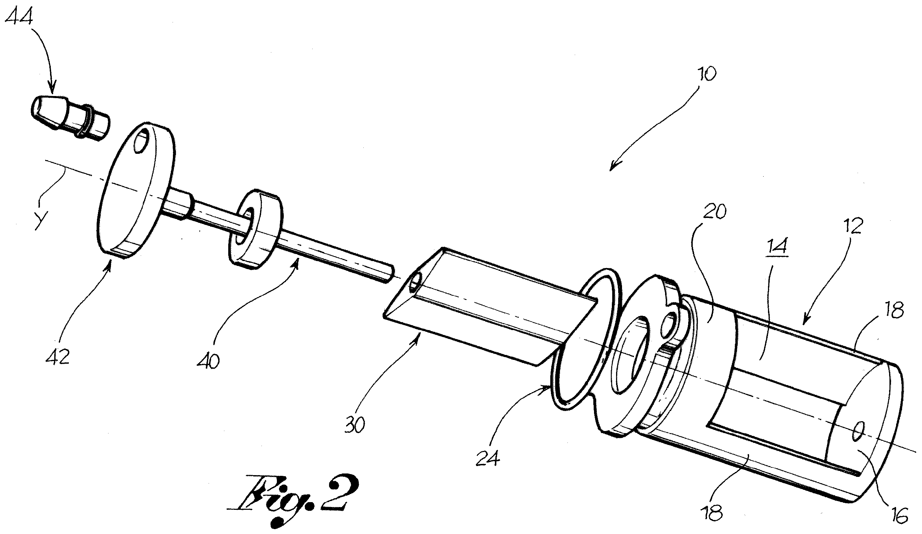

- figure 2 shows a valve group according to the present invention, in separate parts;

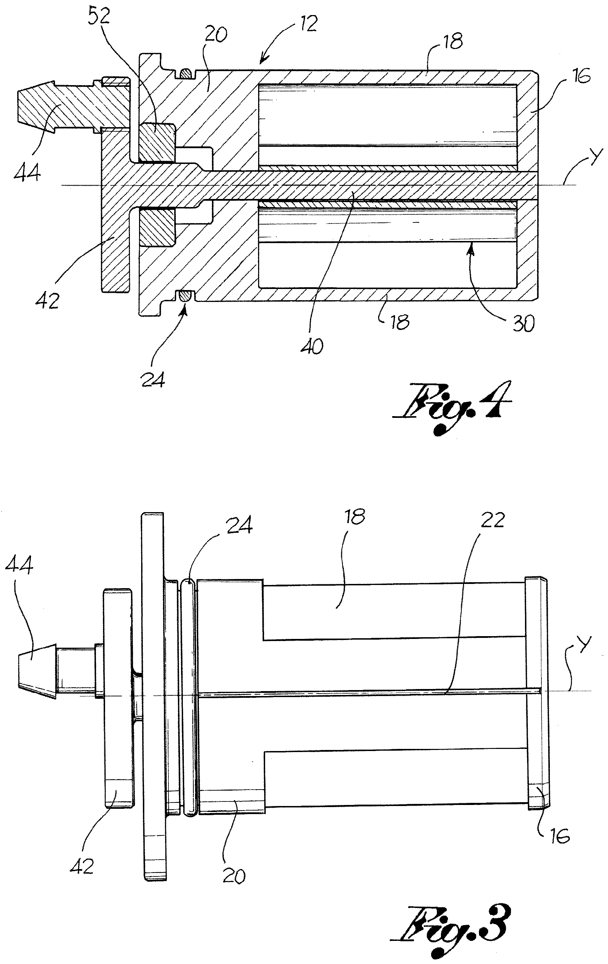

- figure 3 shows the valve group in figure 2, with the parts assembled;
- figure 4 shows a partially sectioned view of the valve group in figure 3;

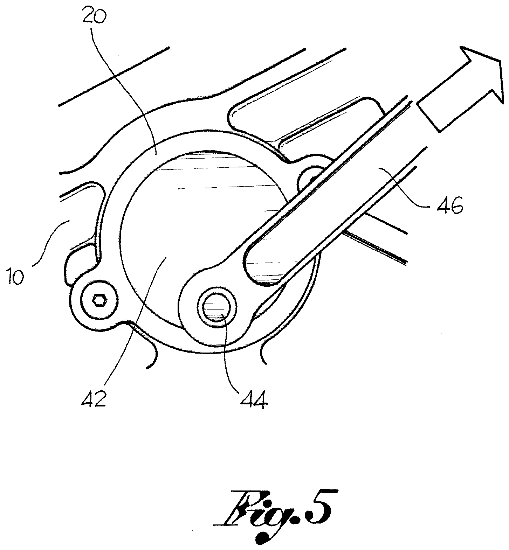

- figure 5 shows a detail of the valve group according to the present invention;

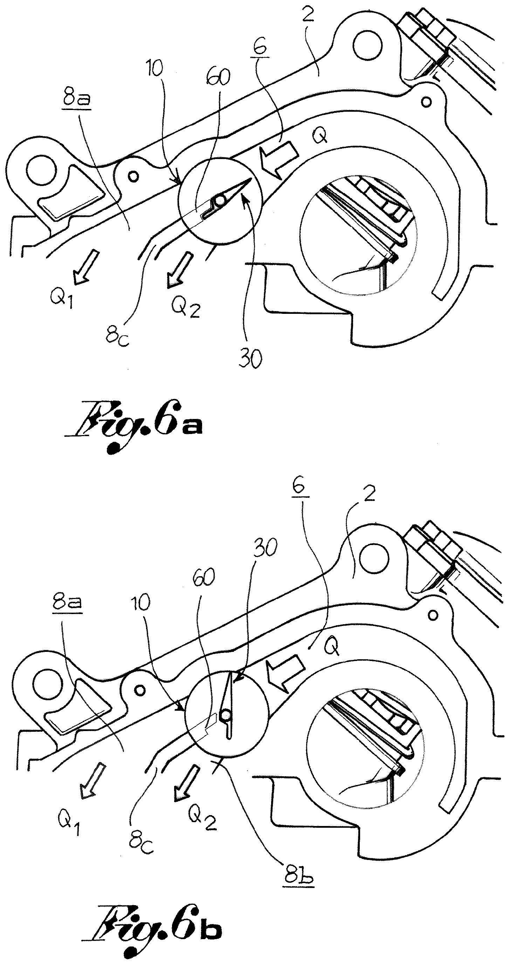

- figures 6a and 6b show a cooling pump containing the valve group of the present invention in a further embodiment variation.

According to one embodiment of the present invention, a mechanically driven cooling pump 1, in particular for vehicles, comprises a pump body 2 and a rotor 4 housed in the pump body 2, for example having a substantially circular shape.

The pump body 2 is connectable to the cooling circuit of the motor, and in particular is connectable to an upstream section of the circuit, from which the liquid is taken in, and a downstream section of the circuit, to which the liquid is supplied, under pressure, towards the motor.

The rotor 4, made to rotate around a rotor rotation axis, is suitable to take in the liquid from the upstream section of the circuit and to send it, under pressure to the downstream section of the circuit.

Downstream of the rotor, the pump body 2 has a delivery chamber 6 having a spiral shape, and a delivery pipe 8, which extends from the delivery chamber 6. The delivery chamber 6 and the delivery pipe 8 have no other apertures towards further pipes, except the aperture of the delivery pipe towards the downstream section of the cooling circuit.

The pump 1 further comprises a valve group 10, to limit, upon command, the passage of the liquid from the delivery chamber 6 to the delivery pipe 8.

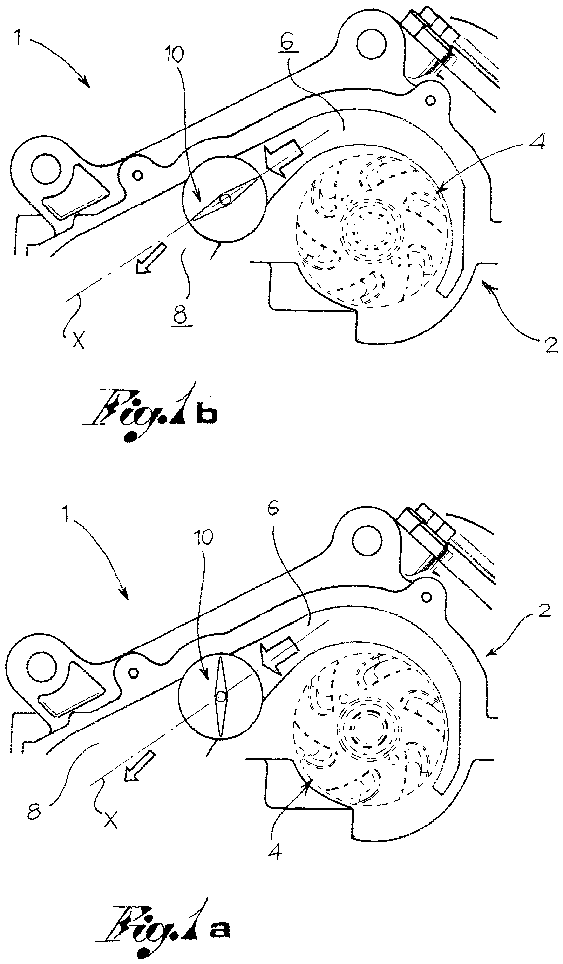

In particular, the valve group 10 is suitable, in a closed configuration, to obstruct the passage from the delivery chamber 6 to the delivery pipe 8, limiting or preferably preventing the passage of liquid from the delivery chamber to the delivery pipe (figure 1a).

In other words, when the valve group is in the closed configuration, the delivery chamber 6 is closed and the liquid remains in it, agitated by the rotating rotor.

In a configuration of maximum aperture, the valve group permits the passage of the maximum quantity possible of liquid from the delivery chamber to the delivery pipe (figure 1b).

According to the present invention, the pump body has a housing compartment and the valve group 10 can be inserted and extracted from the housing compartment, having a cartridge type structure.

In particular, the valve group 10 comprises a valve body 12 formed of an element elongated along a rotation axis Y, preferably having a cylindrical shape, provided with a through pipe 14.

The pipe 14 is delimited by a plate 16 on the bottom, by side walls 18, projecting axially from the plate 16, moulded circularly on the inside, and by a tubular head 20, which surmounts and joins the side walls 18 on the side opposite the plate 16.

The valve body 12 is preferably made in a single piece.

Preferably, the valve body 12 is provided with outer seals, for example in the form of cords 22 housed in grooves provided on the outer surface of the side walls 18, and/or in the form of O-rings 24 housed in a groove provided outside the head 20 or plate 16.

The valve group 10 further comprises an obturator 30, in the shape of a paddle, housed in the pipe 14 of the valve body 12 so as to swivel around the rotation axis Y and obstruct, in the closed configuration, the passage of the liquid through the pipe 14.

Moreover, the pump 1 comprises drive means suitable to act on the obturator 30 to take it from a closed configuration to an open configuration and vice versa.

According to a preferred embodiment, the drive means comprise a shaft 40 extending mainly along the rotation axis Y, connected to the obturator 30.

For example, the shaft 40 axially crosses the obturator 30 and engages at its bottom end with the plate 16, and at the other end with the head 20, for the rotatory support of the obturator. The shaft 40 projects moreover axially externally from the head 20 of the valve body.

Preferably, moreover, the drive means comprise a disc 42, connected to the shaft 40, in particular to the portion of this projecting from the head 20, and a pin 44, connected to the disc 42 in an eccentric position in relation to the rotation axis Y.

Preferably, moreover, the drive means comprise a rod 46 having, upon command, translatory movement, connected to the pin 44 in a rotatory manner.

According to an embodiment variation, the rod is connected to an actuator, such as a vacuum actuator, electromagnetic actuator, hydraulic or pneumatic actuator, electric actuator or the like.

The translation of the rod 46 determines the rotation of the obturator 30.

According to a preferred embodiment, moreover, the valve group comprises an oil retainer element 52, inserted on the shaft 40.

Moreover, the pump 1 comprises detecting means suitable to detect a condition of functioning of the vehicle, for example heat detection means able to measure the temperature of the cooling liquid or the temperature of the parts of the motor.

The drive means are operatively connected to the detecting means, to regulate the aperture of the obturator.

For example, the heat detection means measure the temperature of the parts of the motor and transmit such information to the drive means which, as long as the engine is cold, keep the obturator in a closed configuration. Progressively, as the temperature of the motor increases or according to a predefined function, the drive means move the obturator into an open configuration.

According to one embodiment of the pump, the delivery pipe 8 comprises a main branch 8a and a secondary branch 8b, divided by a bulkhead 8c.

In such embodiment, the valve group 10 comprises a fixed separation wall 60, housed in the pipe 14 of the valve body 12, which defines two separate exit paths from the pipe 14; when the valve group 10 is inserted in the pump body 2, it forms a continuation of the bulkhead 8c.

In the configuration of maximum aperture, the obturator 30 is aligned with the separation wall 60, and the liquid with a flow rate Q flows towards the main branch 8a and towards the secondary branch 8b of the delivery pipe 8.

For example, for a flow rate Q, in the configuration of maximum aperture, a flow of liquid Q1 flows towards the main branch 8a and a flow of liquid Q2 flows towards the secondary branch 8b, wherein Q1>Q2.

In the configuration of maximum closure, the obturator 30 obstructs only one of the two paths identified by the separation wall 60, and in particular the path relative to the main branch 8a.

For example, in the configuration of maximum closure, liquid does not flow toward the main branch 8a (Q1=0 l/min) and a flow of liquid Q2 flows towards the secondary branch 8b, wherein Q1<Q2.

Innovatively, the cooling pump according to the invention enables rationalised production, in that it makes it possible to make the valve group separately from the pump body, following improved design criteria, and then to assemble them together simply and economically.

It is clear that a person skilled in the art may make modifications to the pump described above so as to satisfy contingent requirements while remaining within the scope of protection as defined by the following claims.

## Claims

1. Cooling pump (1), in particular for vehicles, comprising:
- a pump body (2) connectable to an intake section of a cooling circuit and to a delivery section of said circuit;
- a rotor (4), housed in the pump body, suitable to take in the liquid from the intake section and to send the pressurised liquid to the delivery section for continuous rotation around a rotation axis;
wherein, in the pump body (2) are realized a delivery chamber (6), positioned downstream of the rotor (4), and a delivery pipe (8) connected to the delivery chamber (6), connectable to the delivery section of the cooling circuit;
- a valve group (10) positioned between the delivery chamber (6) and the delivery pipe (8) to partialise, in a closed configuration, the passage of the liquid from the delivery chamber (6) to the delivery pipe (8);
wherein the valve group (10) is provided with a through pipe (14) and comprises an obturator (30), housed in the pipe (14), so as to swivel around a rotation axis (Y-Y), suitable to obstruct, in a closed configuration, the passage of liquid through the pipe (14),
- drive means suitable to act on the obturator (30) to move it from a closed configuration to an open configuration and vice versa;
**characterized by** the fact that the pump body (2) has a housing compartment and the valve group (10) has a cartridge type structure such that it can be inserted and exctracted from the housing compartment.

2. Pump according to claim 1, wherein the drive means comprise a shaft (40) connected to the obturator (30), a pin (44), connected eccentrically to the shaft (40) and a rod (46) having, upon command, translatory movement, connected to the pin (44) in a rotatory manner.

3. Pump according to claim 2, wherein the valve group (10) comprises an oil retainer element (52), inserted on the shaft (40), to form a seal to the oil.

4. Pump according to any of the claims 2 or 3, comprising detecting means suitable to detect a condition of functioning of the vehicle, for example heat detection means able to measure the temperature of the cooling liquid or the temperature of the parts of the motor, operatively connected to the drive means.

5. Pump according to any of the claims from 2 to 4, wherein the drive means comprise a disc (42), connected to the shaft (40) and a pin (44), connected to the disc (42) in an eccentric position in relation to the rotation axis (Y-Y).

6. Pump according to claim 5, wherein the drive means comprise a rod (46) having, upon command, translatory movement, connected to the pin (44) in a rotatory manner, such as the translation of the rod (46) determines the rotation of the obturator (30).

7. Pump according to claim 6, wherein the rod (46) is connected to an actuator, such as a vacuum actuator, electromagnetic actuator, hydraulic or pneumatic actuator, electric actuator or the like, such as the translation of the rod (46) determines the rotation of the obturator (30).

8. Pump according to any of the previous claims, wherein the valve group (10) comprises a fixed separation wall (60) housed in the pipe (14), suitable to define two separate exit paths of the liquid in transit in the pipe (14) .

9. Pump according to claim 8, wherein the obturator acts in conjunction with the fixed separation wall (60), to close only one exit path in the closed configuration.

10. Pump according to any of the previous claims, wherein the delivery pipe (8) comprises a main branch (8a) and a secondary branch (8b), divided by a bulkhead (8c).

11. Pump according to claim 9 and claim 10, wherein, in the configuration of maximum aperture, the obturator (30) is aligned with the separation wall (60), and the liquid flows towards the main branch (8a) and towards the secondary branch (8b) of the delivery pipe (8).

## Patentansprüche

1. Kühlpumpe (1), insbesondere für Fahrzeuge, umfassend:
- einen Pumpenkörper (2), welcher mit einem Einlassabschnitt eines Kühlkreises und mit einem Abgabeabschnitt des Kreises verbindbar ist;
- einen in dem Pumpenkörper aufgenommenen Rotor (4), welcher dazu geeignet ist, die Flüssigkeit von dem Einlassabschnitt hereinzulassen und die unter Druck gesetzte Flüssigkeit zu dem Abgabeabschnitt zu befördern, für eine kontinuierliche Drehung um eine Drehachse;
wobei in dem Pumpenkörper (2) eine Abgabekammer (6), welche stromabwärts des Rotors (4) positioniert ist, und eine mit der Abgabekammer (6) verbundene Abgabeleitung (8) realisiert sind, welche mit dem Abgabeabschnitt des Kühlkreises verbindbar ist;
- eine Ventilgruppe (10), welche zwischen der Abgabekammer (6) und der Abgabeleitung (8) positioniert ist, um in einer geschlossenen Konfiguration den Durchgang der Flüssigkeit von der Abgabekammer (6) zu der Abgabeleitung (8) abzuschwächen;
wobei die Ventilgruppe (10) mit einer Durchgangsleitung (14) bereitgestellt ist und ein Absperrorgan (30) umfasst, welches in der Leitung (14) aufgenommen ist, sodass es um eine Drehachse (Y-Y) schwenkt, welches dazu geeignet ist, in einer geschlossenen Konfiguration den Durchgang von Flüssigkeit durch die Leitung (14) zu versperren,
- Antriebsmittel, welche dazu geeignet sind, auf das Absperrorgan (30) zu wirken, um es von einer geschlossenen Konfiguration zu einer offenen Konfiguration und umgekehrt zu bewegen;
**gekennzeichnet durch** die Tatsache, dass der Pumpenkörper (2) ein Gehäusefach aufweist und die Ventilgruppe (10) eine kartuschenartige Struktur aufweist, sodass sie in das Gehäusefach eingesetzt und aus demselben herausgenommen werden kann.

2. Pumpe nach Anspruch 1, wobei die Antriebsmittel eine Welle (40), welche mit dem Absperrorgan (30) verbunden ist, einen Stift (44), welcher mit der Welle (40) exzentrisch verbunden ist, und eine Stange (46) mit einer translatorischen Bewegung bei einer Ansteuerung umfassen, welche mit dem Stift (44) in einer drehenden Weise verbunden ist.

3. Pumpe nach Anspruch 2, wobei die Ventilgruppe (10) ein Ölrückhalteelement (52) umfasst, welches an der Welle (40) eingesetzt ist, um eine Dichtung für das Öl zu bilden.

4. Pumpe nach einem der Ansprüche 2 oder 3, umfassend Erfassungsmittel, welche dazu geeignet sind, einen Zustand eines Betriebs des Fahrzeugs zu erfassen, zum Beispiel Wärmeerfassungsmittel, welche dazu in der Lage sind, die Temperatur der Kühlflüssigkeit oder die Temperatur der Teile des Motors zu messen, welche mit den Antriebsmitteln betriebsmäßig verbunden sind.

5. Pumpe nach einem der Ansprüche 2 bis 4, wobei die Antriebsmittel eine Scheibe (42), welche mit der Welle (40) verbunden ist, und einen Stift (44) umfassen, welcher in einer exzentrischen Position in Bezug auf die Drehachse (Y-Y) mit der Scheibe (42) verbunden ist.

6. Pumpe nach Anspruch 5, wobei die Antriebsmittel eine Stange (46) mit einer translatorischen Bewegung bei einer Ansteuerung umfassen, welche mit dem Stift (44) in einer drehenden Weise verbunden ist, sodass die Translation der Stange (46) die Drehung des Absperrorgans (30) bestimmt.

7. Pumpe nach Anspruch 6, wobei die Stange (46) mit einem Aktuator, wie zum Beispiel einem Vakuumaktuator, einem elektromagnetischen Aktuator, einem hydraulischen oder pneumatischen Aktuator, einem elektrischen Aktuator oder dergleichen, verbunden ist, sodass die Translation der Stange (46) die Drehung des Absperrorgans (30) bestimmt.

8. Pumpe nach einem der vorhergehenden Ansprüche, wobei die Ventilgruppe (10) eine in der Leitung (14) aufgenommene feststehende Trennwand (60) umfasst, welche dazu geeignet ist, zwei separate Ausgangspfade der Flüssigkeit bei der Durchbeförderung in der Leitung (14) zu definieren.

9. Pumpe nach Anspruch 8, wobei das Absperrorgan mit der feststehenden Trennwand (60) zusammenwirkt, um in der geschlossenen Konfiguration nur einen Ausgangspfad zu schließen.

10. Pumpe nach einem der vorhergehenden Ansprüche, wobei die Abgabeleitung (8) einen Hauptzweig (8a) und einen sekundären Zweig (8b) umfasst, welche durch ein Schott (8c) getrennt sind.

11. Pumpe nach Anspruch 9 und Anspruch 10, wobei in der Konfiguration einer maximalen Öffnung das Absperrorgan (30) mit der Trennwand (60) ausgerichtet ist und die Flüssigkeit in Richtung des Hauptzweigs (8a) und in Richtung des sekundären Zweigs (8b) der Abgabeleitung (8) strömt.

## Revendications

1. Pompe de refroidissement (1), en particulier pour des véhicules, comprenant :
- un corps de pompe (2) pouvant être relié à une section d'admission d'un circuit de refroidissement et à une section de refoulement dudit circuit ;
- un rotor (4), logé dans le corps de pompe, apte à admettre le liquide provenant de la section d'admission et à envoyer le liquide sous pression vers la section de refoulement pour une rotation continue autour d'un axe de rotation ;
dans laquelle, dans le corps de pompe (2) sont réalisées une chambre de refoulement (6), positionnée en aval du rotor (4), et une tubulure de refoulement (8) reliée à la chambre de refoulement (6), pouvant être reliées à la section de refoulement du circuit de refroidissement ;
- un groupe de valves (10) positionné entre la chambre de refoulement (6) et la tubulure de refoulement (8) pour fractionner, dans une configuration fermée, le passage du liquide de la chambre de refoulement (6) vers la tubulure de refoulement (8) ;
dans laquelle le groupe de valves (10) est pourvu d'un tuyau traversant (14) et comprend un obturateur (30), logé dans le tuyau (14), de manière à pivoter autour d'un axe de rotation (Y-Y), apte à obstruer, dans une configuration fermée, le passage de liquide dans le tuyau (14),
- des moyens d'entraînement aptes à agir sur l'obturateur (30) pour le déplacer d'une configuration fermée à une configuration ouverte et vice versa ;
**caractérisée par le fait que** le corps de pompe (2) possède un compartiment de logement et que le groupe de valves (10) présente une structure de type cartouche de sorte qu'il peut être inséré et extrait du compartiment de logement.

2. Pompe selon la revendication 1, dans laquelle les moyens d'entraînement comprennent un arbre (40) relié à l'obturateur (30), une broche (44), reliée de manière excentrée à l'arbre (40) et une tige (46) ayant, sur commande, un mouvement de translation, reliée à la broche (44) de manière rotative.

3. Pompe selon la revendication 2, dans laquelle le groupe de valves (10) comprend un élément de rétention d'huile (52), inséré sur l'arbre (40), pour former une étanchéité à l'huile.

4. Pompe selon l'une quelconque des revendications 2 ou 3, comprenant des moyens de détection aptes à détecter un état de fonctionnement du véhicule, par exemple des moyens de détection de chaleur pouvant mesurer la température du liquide de refroidissement ou la température des pièces du moteur, reliés fonctionnellement aux moyens d'entraînement.

5. Pompe selon l'une quelconque des revendications 2 à 4, dans laquelle les moyens d'entraînement comprennent un disque (42), relié à l'arbre (40) et une broche (44), reliée au disque (42) dans une position excentrée par rapport à l'axe de rotation (Y-Y).

6. Pompe selon la revendication 5, dans laquelle les moyens d'entraînement comprennent une tige (46) ayant, sur commande, un mouvement de translation, reliée à la broche (44) de manière rotative, de sorte que la translation de la tige (46) détermine la rotation de l'obturateur (30).

7. Pompe selon la revendication 6, dans laquelle la tige (46) est reliée à un actionneur, tel qu'un actionneur à dépression, un actionneur électromagnétique, un actionneur hydraulique ou pneumatique, un actionneur électrique ou similaire, de sorte que la translation de la tige (46) détermine la rotation de l'obturateur (30).

8. Pompe selon l'une quelconque des revendications précédentes, dans laquelle le groupe de valves (10) comprend une paroi de séparation fixe (60) logée dans le tuyau (14), apte à définir deux voies de sortie séparées du liquide en transit dans le tuyau (14).

9. Pompe selon la revendication 8, dans laquelle l'obturateur agit conjointement avec la paroi de séparation fixe (60), pour fermer une seule voie de sortie dans la configuration fermée.

10. Pompe selon l'une quelconque des revendications précédentes, dans laquelle la tubulure de refoulement (8) comprend une branche principale (8a) et une branche secondaire (8b), séparées par une cloison (8c).

11. Pompe selon la revendication 9 et la revendication 10, dans laquelle, dans la configuration d'ouverture maximale, l'obturateur (30) est aligné avec la paroi de séparation (60), et le liquide s'écoule vers la branche principale (8a) et vers la branche secondaire (8b) de la tubulure de refoulement (8).
